# FASCICULE DE BREVET EUROPEEN

(11) **EP 2 470 813 B1**
(45) Date de publication et mention de la délivrance du brevet: **15.04.2015**
(21) Numéro de dépôt: 10762965.1
(22) Date de dépôt: 04.08.2010
(51) Int. Cl.: F16J 15/32, F16J 15/10, B29C 63/00, B29C 63/16, B29D 11/00

(54) **ENCEINTE COMPRENANT UN ENSEMBLE DE LIAISON ÉTANCHE A GLISSEMENT A L'INTÉRIEUR D'UN PLAN DE TRANSLATION**
KAMMER MIT EINER IN EINER VERSCHIEBUNGSEBENE GLEITENDEN DICHTEN ANSCHLUSSANORDNUNG
CHAMBER INCLUDING A SEALED CONNECTION ASSEMBLY SLIDING INSIDE A TRANSLATION PLANE

(30) Priorité: 24.08.2009 FR 0955764
(43) Date de publication de la demande: 04.07.2012
(73) Titulaire: Essilor International (Compagnie Générale d'Optique), 94220 Charenton-le-Pont (FR)
(72) Inventeur: ROUSSEL, Eric, F-94220 Charenton-Le-Pont (FR)
(74) Mandataire: Cabinet Plasseraud
(86) Numéro de dépôt international: PCT/FR2010/051649
(87) Numéro de publication internationale: WO 2011/023877

(56) Documents cités:
- DE-A1- 4 107 083
- DE-U1- 9 107 907
- FR-A1- 2 810 095
- FR-A1- 2 918 917
- US-A- 4 242 162

## Description

La présente invention concerne une enceinte à pression interne variable, qui comprend un ensemble de liaison étanche à glissement à l'intérieur d'un plan de translation.

Elle concerne aussi un dispositif d'application d'un film plastique sur un verre de lunettes, qui comprend une telle enceinte.

Certains dispositifs nécessitent d'assembler deux pièces l'une avec l'autre pour réaliser simultanément deux fonctions : une première fonction d'étanchéité, notamment d'étanchéité par rapport à un gaz ou à un mélange de gaz, et une seconde fonction de déplacement de l'une des pièces par rapport à l'autre, selon une direction quelconque qui est contenue dans un plan de translation. Un ensemble de liaison étanche à glissement à l'intérieur d'un plan de translation est décrit dans le document DE 9107907 U1.

En outre, l'assemblage recherché peut être soumis à certaines au moins des exigences suivantes :
- l'étanchéité doit être efficace au moins jusqu'à un écart de pression gazeuse qui est fixé par un cahier des charges ;
- la résistance de l'assemblage au déplacement des deux pièces l'une par rapport à l'autre n'est pas trop élevée ;
- l'assemblage utilise un nombre d'éléments mécaniques qui est réduit ;
- les éléments mécaniques qui sont utilisés sont simples à fabriquer et peu onéreux ;
- l'assemblage comporte un nombre d'étapes de montage qui est réduit ;
- l'ensemble de liaison possède des dimensions qui sont réduites, de façon à causer un encombrement faible ; et
- l'entretien de l'ensemble de liaison après une période d'utilisation est le plus faible possible.

La présente invention propose une enceinte à pression interne variable qui satisfait certaines au moins de ces exigences et d'autres encore. Pour cela, l'enceinte comprend un ensemble de liaison étanche à glissement à l'intérieur d'un plan de translation, qui comprend lui-même :
- une première pièce rigide, qui est pourvue d'un orifice et d'une première surface plane entourant cet orifice ; et
- une seconde pièce rigide, qui est pourvue d'une seconde surface plane entourant une partie centrale de cette seconde pièce.

Ces première et seconde pièces sont disposées de sorte que la partie centrale de la seconde pièce soit face à l'orifice de la première pièce, avec les première et seconde surfaces qui sont parallèles et en regard l'une de l'autre. Selon l'invention, l'une parmi la première et la seconde surface comporte une gorge qui entoure l'orifice ou la partie centrale, respectivement, selon un chemin fermé, et l'ensemble de liaison comprend en outre :
- un joint plan, qui possède une surface active plane en forme de couronne circulaire, et qui est disposé dans la gorge de sorte que la surface active de ce joint plan soit en contact continu le long du chemin fermé avec la surface plane de l'autre parmi la première et la seconde pièce que celle qui comporte la gorge, appelée surface d'appui («counter-surface» en anglais) ;
- au moins un premier joint torique, qui est disposé entre le joint plan et un fond de la gorge, avec une profondeur de la gorge qui est intermédiaire entre une épaisseur du premier joint torique et une somme de cette épaisseur du premier joint torique avec une épaisseur du joint plan ;
- un système de commande d'un déplacement des première et seconde pièces l'une par rapport à l'autre, selon deux axes qui sont parallèles au plan de translation, ce système de commande de déplacement étant adapté pour produire un glissement de la surface active du joint plan contre la surface d'appui ; et
- un système de serrage des première et seconde pièces, qui est disposé pour comprimer le joint plan contre la surface d'appui, en produisant une force de compression du joint plan à travers le premier joint torique, perpendiculairement au plan de translation.

Ainsi, selon une caractéristique de l'invention, deux joints sont superposés dans la gorge, continûment autour de l'orifice : le joint torique qui est situé en premier au fond de la gorge, et le joint plan qui est situé au dessus du joint torique et qui est appliqué contre la surface d'appui. Le système de serrage produit la force de compression du joint plan contre cette surface d'appui. Grâce à la superposition des deux joints selon l'invention, la surface active du joint plan peut mieux se conformer aux microreliefs de la surface d'appui qui sont situés en face de la gorge, pour une même intensité de la force de compression. Autrement dit, la capacité de déformation du joint plan pour pénétrer entre les aspérités de la surface d'appui, est supérieure pour une même intensité de la force de compression. Dans le jargon de l'Homme du métier, l'association des deux joints dans la gorge confère au joint plan une compliance qui est plus grande. Ainsi, pour une même étanchéité au gaz du contact entre le joint plan et la surface d'appui, la force de compression qui est ajustée en utilisant le système de serrage peut être réduite. Le frottement de résistance au glissement de la surface active du joint plan sur la surface d'appui est aussi diminué en conséquence, de sorte que les deux pièces peuvent être déplacées l'une par rapport à l'autre sans effort excessif, parallèlement au plan de translation.

En outre, le joint torique assure une étanchéité entre le joint plan et le fond de la gorge, qui est supérieure à celle que procurerait un contact direct du joint plan avec le fond de la gorge.

Par ailleurs, les éléments mécaniques qui sont utilisés sont les suivants, outre les deux pièces rigides qui sont assemblées : deux joints, un système de commande de déplacement plan à deux axes et un système de serrage. Tous ces éléments peuvent être simples, puisque les frottements et la force de compression qui sont mis en oeuvre sont réduits.

Enfin, l'ensemble de liaison est facile à assembler et provoque un encombrement minimal. En particulier, le dispositif de commande de déplacement et le dispositif de serrage peuvent être des éléments mécaniques qui sont disponibles commercialement. Ils peuvent aussi être mis en oeuvre facilement, étant donné que les autres éléments de l'ensemble de liaison sont peu encombrants.

Lorsque le dispositif de commande de déplacement est actionné, la partie centrale de la seconde pièce défile devant l'orifice de la première pièce, parallèlement à l'ouverture de cet orifice. Simultanément, un écart de pression peut être maintenu, entre deux gaz qui sont présents entre les deux pièces, respectivement à l'intérieur et à l'extérieur du chemin fermé de la gorge.

Selon des caractéristiques supplémentaires de l'invention, la première pièce rigide forme une partie au moins d'une paroi de l'enceinte à pression interne variable, et la seconde pièce rigide est connectée à un support qui s'étend à l'intérieur de l'enceinte. Le support est ainsi mobile par rapport à l'enceinte, selon des directions de translation qui sont parallèles au plan de translation, lorsque le système de commande de déplacement est actionné. L'invention permet donc de déplacer à l'intérieur de l'enceinte, à partir de l'extérieur de celle-ci, un élément ou un outil qui est porté par le support.

Divers modes de réalisation préférés de l'invention pourront utiliser certains des perfectionnements suivants, séparément ou en combinaison :
- l'une au moins parmi la surface active du joint plan et la surface d'appui peut être enduite d'un agent lubrifiant ;
- l'ensemble de liaison peut comprendre en outre un second joint torique qui est disposé entre le joint plan et le fond de la gorge, concentriquement avec le premier joint torique, le second joint torique ayant une épaisseur identique à celle du premier joint torique, de sorte que les premier et second joints toriques soient comprimés simultanément entre le joint plan et le fond de la gorge ;
- la surface d'appui peut posséder un écart moyen de rugosité Ra qui est inférieur à 3,2 µm, de préférence inférieur à 0,8 µm ;
- le système de serrage peut comprendre au moins une vis qui est engagée dans au moins une portion connectée rigidement à la première ou la seconde pièce, et qui est disposée pour ajuster la force de compression du joint plan ; et
- la partie centrale de la seconde pièce peut comporter une portion saillante qui est plus étroite que l'orifice de la première pièce, et qui est engagée dans l'orifice avec un espace libre autour de cette portion saillante, à l'intérieur d'un bord périphérique de l'orifice.

Pour une application ophtalmique, le support peut comprendre une tête de fixation qui est adaptée pour maintenir fermement un verre de lunettes à l'intérieur de l'enceinte. Il peut aussi comprendre un système de déplacement axial qui est adapté pour déplacer en outre la tête de fixation parallèlement à un axe qui traverse le plan de translation, et pour tourner en outre la tête de fixation autour de cet axe. Un tel support permet de déplacer le verre de lunettes par translation dans les trois directions de l'espace à l'intérieur de l'enceinte, et de le tourner autour de l'axe en commandant tous ces déplacements et rotations du verre depuis l'extérieur de l'enceinte.

Enfin, l'invention propose aussi un dispositif d'application d'un film plastique sur un verre de lunettes, qui comprend une enceinte à pression interne variable telle que décrite ci-dessus, avec des parois latérales, une paroi inférieure et une paroi supérieure. La première pièce rigide forme une partie au moins de la paroi inférieure et la paroi supérieure est pourvue d'une ouverture. Le dispositif comprend alors en outre :
- un système de fixation du film autour de l'ouverture de la paroi supérieure de l'enceinte ; et
- un système de variation et de contrôle de la pression dans l'enceinte.

Le système de fixation est adapté pour maintenir fermement un bord périphérique du film de sorte que le film forme une fermeture étanche de l'enceinte. Le film qui est ainsi maintenu présente alors dans l'ouverture de la paroi supérieure une déformation variable en fonction de la pression. En outre, le système de commande de déplacement permet de déplacer un point de référence du verre de lunettes par rapport à un point de référence du film plastique, parallèlement au plan de translation, pour amener le point de référence du verre de lunettes au droit du point de référence du film plastique.

D'autres particularités et avantages de la présente invention apparaîtront dans la description ci-après d'un exemple de mode de réalisation non limitatif, en référence aux dessins annexés, dans lesquels :
- la figure 1 est une vue en coupe d'un dispositif utilisant l'invention ; et
- la figure 2 est une vue grossie d'une partie de la figure 1, contenant la réalisation de l'invention.

Pour raison de clarté, les dimensions des éléments qui sont représentés dans ces figures ne correspondent ni à des dimensions réelles ni à des rapports de dimensions réels. En outre, des références identiques qui sont indiquées dans les deux figures désignent des éléments identiques.

Dans la suite, à titre d'illustration, l'invention est décrite en détail dans le cadre d'un dispositif qui est adapté pour appliquer une portion d'un film plastique 300 sur un verre de lunettes 400. Les références suivantes désignent les éléments qui sont indiqués ci-après :
300 : le film plastique,
400 : le verre de lunettes,
100 : une paroi latérale d'une enceinte à pression interne variable,
101 : une paroi supérieure de l'enceinte, avec une ouverture O₁₀₁ ;
1 : une paroi inférieure de l'enceinte, qui constitue la première pièce rigide d'un ensemble de liaison selon l'invention ;
2 : une pièce mobile qui constitue la seconde pièce rigide de l'ensemble de liaison selon l'invention, et qui peut être déplacée selon des directions transversales par rapport à l'enceinte ; et
200 : un système de variation et de contrôle de la pression dans l'enceinte.

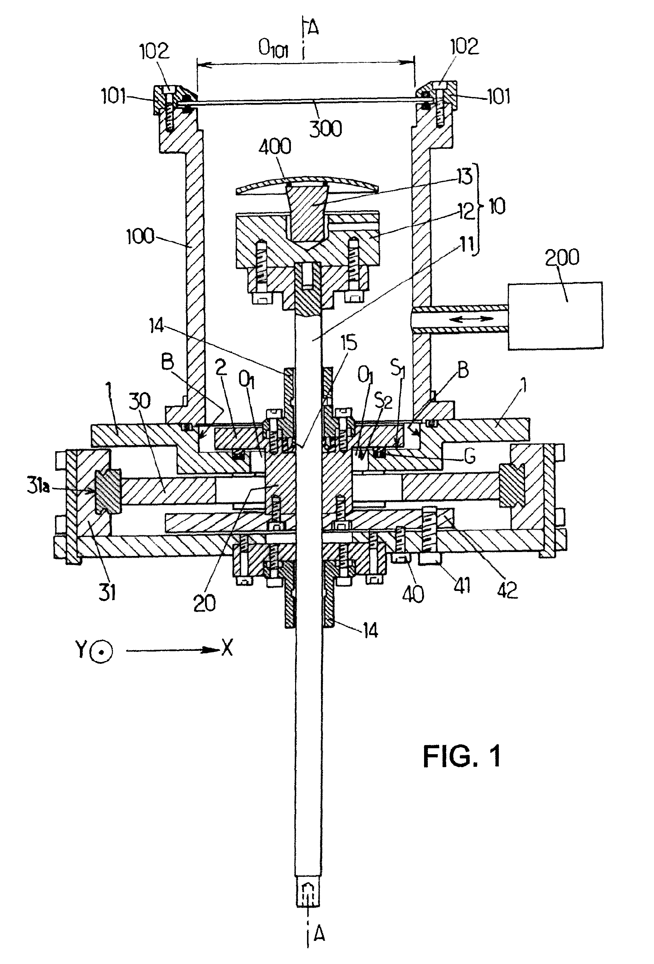

Dans le dispositif particulier de la figure 1, la paroi supérieure 101 possède une forme annulaire autour de l'ouverture O₁₀₁. Elle peut être fixée fermement, par exemple au moyen de plusieurs vis 102, sur le bord supérieur de la paroi latérale 100. Lorsque le bord périphérique de la portion de film plastique 300 est inséré entre les parois 100 et 101, les vis 102 constituent un système de fixation du film 300 autour de l'ouverture O₁₀₁. Le film 300 ferme alors l'enceinte à pression variable de façon étanche.

Le système 200 de variation et de contrôle de la pression dans l'enceinte n'est pas représenté en détail, étant entendu que l'Homme du métier connaît bien de tels systèmes. Le film 300, qui est maintenu par le système de fixation, présente dans l'ouverture O₁₀₁ une déformation qui est variable en fonction de la pression produite par le système 200.

La paroi inférieure 1 possède un orifice O₁, qui peut être centré par rapport à un axe longitudinal de l'enceinte, noté A-A.

La pièce mobile 2 ferme l'orifice O₁. En outre, elle possède une portion saillante 20 qui s'étend à travers l'orifice O₁ en étant plus étroite qu'un bord périphérique B de cet orifice, dans toutes les directions parallèles à la paroi inférieure 1. De cette façon, la portion saillante 20 est compatible avec des déplacements de la pièce mobile 2 selon ces directions. La portion 20 sert à la fois à entraîner la pièce mobile 2 en déplacement et à tenir un support qui s'étend à l'intérieur de l'enceinte.

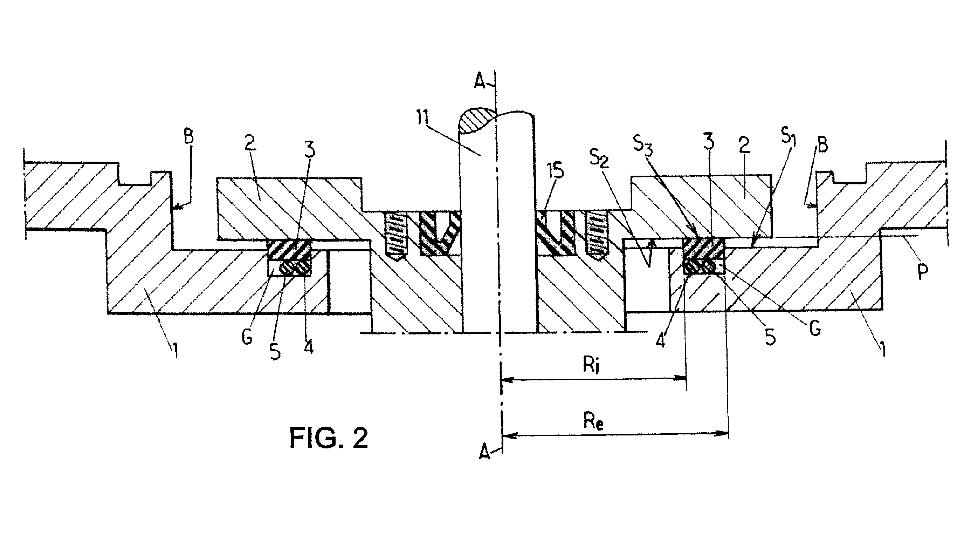

La paroi inférieure 1 et la pièce mobile 2 possèdent respectivement des surfaces planes qui sont parallèles et en vis-à-vis, et qui sont référencées S₁ et S₂. La surface S₁, de la paroi inférieure 1, est pourvue d'une gorge G dont la section peut être rectangulaire. La gorge G entoure à distance l'orifice O₁. Avantageusement, la gorge G et l'orifice O₁ peuvent être circulaires et concentriques selon l'axe A-A. Plusieurs joints annulaires sont disposés dans la gorge G de la façon suivante, montrée plus précisément sur la figure 2 :
- un premier joint torique 4, qui est disposé au fond de la gorge G, de préférence contre le flanc de la gorge G qui est le plus près de l'axe A-A ;
- optionnellement, un second joint torique 5, qui est aussi disposé au fond de la gorge G, autour du premier joint torique 4 par rapport à l'axe A-A ; et
- un joint plan 3, qui est disposé dans la gorge G sur le joint torique 4, et aussi sur le joint torique 5 lorsque ce dernier est présent.

Le joint plan 3 possède une surface active S₃ qui est plane et en forme de couronne circulaire. Sa section est de préférence rectangulaire. La gorge G possède une profondeur qui adaptée aux épaisseurs des joints 3 et 4, pour que le joint plan 3 soit encastré dans la gorge G sur une partie de son épaisseur, alors que sa surface active S₃ est proéminente par rapport à la surface S₁ de la paroi inférieure 1. La surface active S₃ est parallèle à la surface S₂ de la pièce mobile 2, pour établir une liaison étanche à glissement avec cette dernière. Pour cette raison, la surface S₂ est appelée surface d'appui. En utilisation, la paroi inférieure 1, le ou les joint(s) torique(s) 4 (et 5), le joint plan 3 et la pièce mobile 2 sont comprimés selon l'axe longitudinal A-A. En outre, lorsque le joint torique 5 est utilisé conjointement avec le joint torique 4, ils ont des épaisseurs identiques de sorte que la surface active S₃ du joint plan 3 soit encore parallèle à la surface d'appui S₂.

Par exemple, lorsque la surface d'appui S₂ est en INOX, le joint plan 3 peut être en polytétrafluoroéthylène (PTFE) avec une épaisseur mesurée parallèlement à l'axe A-A égale à 3 mm, un rayon interne Rᵢ égal à 30 mm, et un rayon externe Rₑ égal à 35 mm. Le joint torique 4, et le joint torique 5 lorsque ce dernier est utilisé, peuvent être du type joints Viton^{®}, joints EPDM^{®} ou joints en nitrile, avec un même diamètre de corde égal à 1,78 mm.

De préférence, la surface active S₃ du joint plan 3 et la surface d'appui S₂ de la pièce mobile 2 peuvent être enduites d'un agent lubrifiant qui réduit les frottements entre ces deux surfaces lorsque la pièce mobile 2 est déplacée. Cet agent lubrifiant peut être de la graisse de silicone, aussi appelée couramment graisse à vide, ou être de la graisse de synthèse, telle qu'un mélange d'une huile minérale avec un savon d'hydroxystéarate de lithium, par exemple. Il peut aussi participer à l'étanchéité de la liaison entre la paroi inférieure 1 et la pièce mobile 2.

La surface d'appui S₂ présente de préférence une rugosité qui est faible. L'Homme du métier connaît les méthodes de traitement de surface qui permettent de réduire sa rugosité, de sorte qu'il n'est pas nécessaire de les citer ici. Avantageusement, la surface d'appui S₂ possède un écart moyen de rugosité Ra, dit rugosité arithmétique, qui est inférieur à 3,2 µm, par exemple égal à 0,7µm. De façon connue, la rugosité arithmétique Ra est la moyenne des hauteurs absolues de pics et de vallées qui sont détectés sur la surface S₂, ces hauteurs étant mesurées par rapport au plan moyen de la surface. Une telle mesure de la rugosité arithmétique Ra peut être effectuée de façon statistique sur un échantillon de surface en utilisant un rugosimètre, conformément à la norme ISO4287.

Un système de commande du déplacement de la pièce mobile 2 comprend un ensemble de glissières rectilignes orientées selon deux axes X et Y, qui sont parallèles à la surface d'appui S₂ et de préférence perpendiculaires entre eux. La pièce mobile 2, lorsqu'elle est assemblée avec ces glissières, forme une petite table de déplacement à deux axes, dont la partie fixe est connectée à la paroi inférieure 1. La référence 30 désigne globalement les parties du système de commande de déplacement qui sont mobiles uniquement selon l'axe X, et la référence 31 désigne globalement les parties de ce système qui sont mobiles selon l'axe Y par rapport aux parties 30. La référence 31 a désigne les glissières qui permettent les déplacements parallèles à l'axe Y. Les glissières des déplacements parallèles à l'axe X ne sont pas visibles sur la figure 1, étant situées en avant et en arrière du plan de cette figure. De même, des vis micrométriques qui permettent de contrôler les longueurs des déplacements selon les axes X et Y ne sont pas représentées. Un tel système de commande de déplacement est connu en soi, si bien qu'il n'est pas nécessaire de le décrire plus en détail ici.

La pièce mobile 2 est connectée à la partie mobile 31 par sa partie saillante 20, de sorte qu'elle peut être déplacée par translation selon des directions quelconques qui sont parallèles au plan de la surface d'appui S₂, et qui sont des combinaisons de deux composantes de translation respectivement selon les axes X et Y. Pour cette raison, le plan de la surface d'appui S₂ est dit plan de translation de l'ensemble de liaison, et est noté P sur la figure 2.

Par exemple, la pièce mobile 2 peut être reliée à la partie mobile 31 par des couples de vis 40 et 41, qui permettent d'ajuster l'écart entre la surface S₁ de la paroi inférieure 1 et la surface d'appui S₂ de la pièce mobile 2. De cette façon, il est possible d'amener précisément la surface active S₃ du joint plan 3 contre la surface d'appui S₂. Le joint plan 3 réalise ainsi une étanchéité gazeuse entre l'intérieur et l'extérieur de l'enceinte, qui peut être efficace jusqu'à des écarts de pression supérieurs à 3 bars, voire supérieurs à 6 bars. Dans le mode de réalisation qui est illustré par la figure 1, la partie mobile 31 est reliée à la partie saillante 20 de la pièce mobile 2 par une pièce intermédiaire rigide 42. Dans d'autres modes de réalisation, cette pièce intermédiaire peut être élastique, c'est-à-dire avec une fonction de ressort, pour ajuster la force de compression du joint plan 3 contre la paroi inférieure 1. Alternativement, des éléments de ressorts peuvent être utilisés aux extrémités des vis 40 et/ou 41, pour ajuster plus précisément la force de compression du joint 3 contre la surface d'appui S₂.

Pour l'application ophtalmique qui est considérée ici, la portion saillante 20 de la pièce mobile 2 peut porter un support («holder» en anglais) 10 qui est adapté pour tenir rigidement un verre ophtalmique dans l'enceinte. Un tel support 10 peut comprendre une tige («shaft») 11 qui traverse la portion saillante 20, et qui est pourvue à son extrémité interne dans l'enceinte d'une embase 12. Une tête de fixation 13, qui est adaptée pour maintenir fermement le verre de lunettes 400, est elle-même fixée sur l'embase 12. Selon un perfectionnement du dispositif, la tige 11 peut coulisser parallèlement à l'axe A-A à travers la portion saillante 20, et tourner autour d'un axe lié à la pièce mobile 2 et parallèle à l'axe A-A. Pour cela, la portion saillante 20 peut être pourvue de guides 14 et d'un joint 15, qui peut être du type joint circulaire à lèvre interne ou joint SPI.

Usuellement, le film plastique 300 comporte une partie utile qui est prédéterminée, et qui correspond précisément à la forme du verre de lunettes 400. Autrement dit, la partie utile du film 300 et le verre 400 ont des bords périphériques respectifs qui sont prévus pour coïncider lorsque le film est appliqué sur le verre. Il est donc nécessaire d'aligner précisément le verre 400 par rapport à la partie utile du film 300, parallèlement à l'axe A-A, une fois que le film a été fixé sur l'enceinte.

Le système de commande de déplacement de la pièce mobile 2 permet de déplacer le verre de lunettes 400 par rapport au film 300, parallèlement au plan de translation P. De cette façon, le verre de lunettes peut être amené exactement au droit du film. Lorsque le support 10 est lui-même mobile par rapport à la pièce 2 comme il a été décrit plus haut, il peut être tourné pour orienter le verre 400 conformément à une orientation film 300 sur l'enceinte. Pour cela, des repères ou une mire imprimée sur le film 300 et un système de détection de la position du verre 400 par rapport au film peuvent être utilisés. Le verre de lunettes peut ainsi être présenté sous le film plastique, exactement au droit de la partie utile de ce dernier et avec une même orientation que celle-ci.

Le film 300 peut alors être préformé en variant la pression à l'intérieur de l'enceinte. Par exemple, une courbure du film 300 vers l'extérieur de l'enceinte peut être obtenue en commandant le système 200 pour augmenter la pression. Les joints 3 et 4 assurent qu'aucune fuite gazeuse ne se produit, de sorte que la courbure qui est conférée au film 300 lors de cette étape de préformage peut être ajustée précisément, par rapport à la forme de la face du verre 400 sur laquelle le film doit être appliqué.

Le verre de lunettes 400 est alors appliqué contre le film plastique 300 en enfonçant la tige 11 dans l'enceinte, et en repoussant le film avec le verre vers l'extérieur de l'enceinte. Eventuellement, des mouvements complémentaires d'application du film sur le verre peuvent être combinés avec l'enfoncement de la tige 11.

Il est entendu que de nombreuses modifications et adaptations peuvent être introduites dans le mode de réalisation de l'invention qui vient d'être décrit en détail. En particulier, la gorge G et les joints 3, 4 et éventuellement 5 peuvent être portés par la pièce mobile 2. La surface S₁ de la pièce rigide 1, qui comporte l'orifice O₁, constitue alors la surface d'appui.

Il est aussi entendu qu'une enceinte à pression interne variable, qui munie selon l'invention de l'ensemble de liaison étanche et à glissement, peut être utilisée pour des applications différentes de celle qui a été décrite en détail, et notamment dans d'autres domaines techniques que l'ophtalmique. Les dimensions et les matériaux qui ont été cités peuvent aussi être modifiés en fonction de chaque application.

## Revendications

1. Enceinte à pression interne variable, comprenant un ensemble de liaison étanche à glissement à l'intérieur d'un plan de translation (P), ledit ensemble de liaison comprenant lui-même :
- une première pièce rigide (1) pourvue d'un orifice (O₁) et d'une première surface plane (S₁) entourant ledit orifice ; et
- une seconde pièce rigide (2) pourvue d'une seconde surface plane (S₂) entourant une partie centrale de ladite seconde pièce ;
les première et seconde pièces étant disposées de sorte que la partie centrale de la seconde pièce soit face à l'orifice de la première pièce, avec les première et seconde surfaces parallèles et en regard l'une de l'autre,
l'une (1) parmi la première et la seconde surface comportant une gorge (G) entourant l'orifice ou la partie centrale, respectivement, selon un chemin fermé et ledit ensemble de liaison comprenant en outre :
- un joint plan (3), avec une surface active plane (S₃) en forme de couronne circulaire, et disposé dans la gorge (G) de sorte que la surface active dudit joint plan soit en contact continu le long du chemin fermé avec la surface plane (S₂) de l'autre (2) parmi la première et la seconde pièce que celle qui comporte la gorge, appelée surface d'appui ;
- au moins un premier joint torique (4), disposé entre le joint plan (3) et un fond de la gorge (G), une profondeur de la gorge étant intermédiaire entre une épaisseur du premier joint torique et une somme de ladite épaisseur du premier joint torique avec une épaisseur du joint plan ;
- un système (30, 31) de commande d'un déplacement des première (1) et seconde (2) pièces l'une par rapport à l'autre, selon deux axes (X, Y) parallèles au plan de translation (P), adapté pour produire un glissement de la surface active (S₃) du joint plan (3) contre la surface d'appui (S₂) ; et
- un système de serrage des première (1) et seconde (2) pièces, disposé pour comprimer le joint plan (3) contre la surface d'appui (S₂), en produisant une force de compression dudit joint plan à travers le premier joint torique (4), perpendiculairement au plan de translation (P),
enceinte dans laquelle ladite première pièce rigide (1) forme une partie au moins d'une paroi de ladite enceinte, et la seconde pièce (2) rigide est connectée à un support (10) s'étendant à l'intérieur de ladite enceinte, de sorte que ledit support soit mobile par rapport à l'enceinte, selon des directions de translation parallèles audit plan de translation (P), lorsque le système de commande de déplacement (30, 31) est actionné.

2. Enceinte selon la revendication 1, dans laquelle l'une au moins parmi la surface active (S₃) du joint plan (3) et la surface d'appui (S₂) est enduite d'un agent lubrifiant.

3. Enceinte selon la revendication 1 ou 2, comprenant en outre un second joint torique (5) disposé entre le joint plan (3) et le fond de la gorge (G), concentriquement avec le premier joint torique (4), le second joint torique ayant une épaisseur identique à l'épaisseur du premier joint torique, de sorte que les premier et second joints toriques sont comprimés simultanément entre ledit joint plan et ledit fond de la gorge.

4. Enceinte selon l'une quelconque des revendications précédentes, dans laquelle la surface d'appui (S₂) possède un écart moyen de rugosité Ra inférieur à 3,2 µm, de préférence inférieur à 0,8 µm.

5. Enceinte selon l'une quelconque des revendications précédentes, dans laquelle le système de serrage comprend au moins une vis (40, 41) engagée dans au moins une portion connectée rigidement à l'une de la première (1) ou seconde (2) pièce, et disposée pour ajuster la force de compression du joint plan (3).

6. Enceinte selon l'une quelconque des revendications précédentes, dans laquelle la partie centrale de la seconde pièce (2) comporte une portion saillante (20) plus étroite que l'orifice (O₁) de la première pièce (1), et engagée dans ledit orifice avec un espace libre autour de ladite portion saillante, à l'intérieur d'un bord périphérique (B) de l'orifice.

7. Enceinte selon l'une quelconque des revendications précédentes, dans laquelle le support (10) comprend une tête de fixation (13) adaptée pour maintenir fermement un verre de lunettes (400) à l'intérieur de l'enceinte, et dans laquelle ledit support comprend aussi un système de déplacement axial (11, 14, 15) adapté pour déplacer en outre la tête de fixation parallèlement à un axe (A-A) qui traverse le plan de translation (P), et pour tourner en outre ladite tête de fixation autour dudit axe.

8. Dispositif d'application d'un film plastique (300) sur un verre de lunettes (400) comprenant :
- une enceinte à pression interne variable selon l'une quelconque des revendications précédentes, comprenant des parois latérales (100), une paroi inférieure et une paroi supérieure (101), la première pièce rigide (1) formant une partie au moins de la paroi inférieure et la paroi supérieure étant pourvue d'une ouverture (O₁₀₁) ;
- un système de fixation du film autour de l'ouverture (O₁₀₁) de la paroi supérieure (101), adapté pour maintenir fermement un bord périphérique du film (300) de sorte que ledit film forme une fermeture étanche de l'enceinte ; et
- un système (200) de variation et de contrôle de la pression dans l'enceinte, le film maintenu par le système de fixation présentant dans l'ouverture (O₁₀₁) de la paroi supérieure (101) une déformation variable en fonction de ladite pression ;
dans lequel le système de commande de déplacement permet de déplacer un point de référence dudit verre de lunettes (400) par rapport à un point de référence du film plastique (300), parallèlement au plan de translation (P), pour amener le point de référence du verre de lunettes au droit du point de référence du film plastique.

## Patentansprüche

1. Kammer mit variablem Innendruck, die eine in einer Verschiebungsebene (P) gleitende dichte Anschlussanordnung umfasst, wobei die Anschlussanordnung Folgendes umfasst:
- ein erstes starres Teil (1), das mit einer Öffnung (O₁) und einer ersten ebenen Fläche (S₁), die die Öffnung umgibt, versehen ist; und
- ein zweites starres Teil (2), das mit einer zweiten ebenen Fläche (S₂) versehen ist, die einen mittleren Abschnitt des zweiten Teils umgibt;
wobei das erste und das zweite Teil so angeordnet sind, dass der mittlere Abschnitt des zweiten Teils der Öffnung des ersten Teils zugewandt ist, wobei die erste und die zweite Fläche parallel sind und einander gegenüberliegen,
wobei eine (1) der ersten und zweiten Fläche eine Nut (G) aufweist, die die Öffnung bzw. den mittleren Abschnitt unter Bildung eines geschlossenen Wegs umgibt, und die Anschlussanordnung ferner Folgendes umfasst:
- eine ebene Dichtung (3) mit einer aktiven ebenen Fläche (S₃) in Form eines kreisförmigen Kranzes, die so in der Nut (G) angeordnet ist, dass die aktive Fläche der ebenen Dichtung entlang dem geschlossenen Weg mit der ebenen Fläche (S₂) des anderen (2) des ersten und des zweiten Teils, der nicht die Nut enthält, die als Anlagefläche bezeichnet wird, in ständigem Kontakt ist;
- mindestens eine erste O-Ring-Dichtung (4), die zwischen der ebenen Dichtung (3) und einem Grund der Nut (G) angeordnet ist, wobei eine Tiefe der Nut zwischen einer Dicke der ersten O-Ring-Dichtung und einer Summe der Dicke der ersten O-Ring-Dichtung und einer Dicke der ebenen Dichtung liegt;
- ein System (30, 31) zur Ansteuerung einer Bewegung des ersten (1) und des zweiten (2) Teils bezüglich einander entlang zweier Achsen (X, Y), die parallel zur Verschiebungsebene (P) sind, das zur Erzeugung eines Gleitens der aktiven Fläche (S₃) der ebenen Dichtung (3) an der Anlagefläche (S₂) ausgeführt ist; und
- ein System zum Festklemmen des ersten (1) und zweiten (2) Teils, das zum Drücken der ebenen Dichtung (3) gegen die Anlagefläche (S₂) unter Erzeugung einer Druckkraft der ebenen Dichtung durch die erste O-Ring-Dichtung (4) senkrecht zur Verschiebungsebene (P) angeordnet ist,
wobei bei der Kammer das erste starre Teil (1) mindestens einen Abschnitt einer Wand der Kammer bildet und das zweite starre Teil (2) mit einer Stütze (10) verbunden ist, die sich im Inneren der Kammer erstreckt, derart, dass die Stütze bezüglich der Kammer entlang zur Verschiebungsebene (P) parallelen Verschiebungsrichtungen beweglich ist, wenn das Bewegungsansteuerungssystem (30, 31) betätigt wird.

2. Kammer nach Anspruch 1, wobei die aktive Fläche (S₃) der ebenen Dichtung (3) und/oder die Anlagefläche (S₂) mit einem Schmiermittel beschichtet sind/ist.

3. Kammer nach Anspruch 1 oder 2, die des Weiteren eine zweite O-Ring-Dichtung (5) umfasst, die zwischen der ebenen Dichtung (3) und dem Grund der Nut (G) konzentrisch zur ersten O-Ring-Dichtung (4) angeordnet ist, wobei die zweite O-Ring-Dichtung eine Dicke aufweist, die mit der der ersten O-Ring-Dichtung identisch ist, so dass die erste und die zweite O-Ring-Dichtung gleichzeitig zwischen der ebenen Dichtung und dem Grund der Nut komprimiert werden.

4. Kammer nach einem der vorhergehenden Ansprüche, wobei die Anlagefläche (S₂) eine mittlere Rauigkeitsabweichung Ra von unter 3,2 µm, vorzugsweise unter 0,8 µm, besitzt.

5. Kammer nach einem der vorhergehenden Ansprüche, wobei das Klemmsystem mindestens eine Schraube (40, 41) aufweist, die in mindestens einem starr mit dem ersten (1) oder zweiten (2) Teil verbundenen Teil in Eingriff steht und zur Einstellung der Druckkraft der ebenen Dichtung (3) angeordnet ist.

6. Kammer nach einem der vorhergehenden Ansprüche, wobei der mittlere Abschnitt des zweiten Teils (2) einen vorspringenden Teil (20) aufweist, der schmaler ist als die Öffnung (O₁) des ersten Teils (1) und mit einem Freiraum um den vorspringenden Teil in einem Umfangsrand (B) der Öffnung in der Öffnung in Eingriff steht.

7. Kammer nach einem der vorhergehenden Ansprüche, wobei die Stütze (10) einen Befestigungskopf (13) umfasst, der zum Festhalten eines Brillenglases (400) in der Kammer ausgeführt ist, und wobei die Stütze weiterhin ein Axialbewegungssystem (11, 14, 15), das weiterhin zum Bewegen des Befestigungskopfs parallel zu einer die Verschiebungsebene (P) durchquerenden Achse (A-A) und weiterhin zum Drehen des Befestigungskopfs um die Achse ausgeführt ist, umfasst.

8. Vorrichtung zum Aufbringen einer Kunststofffolie (300) auf ein Brillenglas (400), umfassend:
- eine Kammer mit variablem Innendruck nach einem der vorhergehenden Ansprüche, die Seitenwände (100), eine untere Wand und eine obere Wand (101) umfasst, wobei das erste starre Teil (1) mindestens einen Abschnitt der unteren Wand bildet und die obere Wand mit einem Durchlass (O₁₀₁) versehen ist;
- ein System zur Befestigung der Folie um den Durchlass (O₁₀₁) der oberen Wand (101), das zum Festhalten eines Umfangsrands der Folie (300) derart, dass die Folie einen dichten Verschluss der Kammer bildet, ausgeführt ist; und
- ein System (200) zur Änderung und Regulierung des Drucks in der Kammer, wobei die durch das Befestigungssystem gehaltene Folie in dem Durchlass (O₁₀₁) der oberen Wand (101) eine in Abhängigkeit von dem Druck variable Verformung aufweist;
wobei das System zur Ansteuerung einer Bewegung das Bewegen eines Bezugspunkts des Brillenglases (400) bezüglich eines Bezugspunkts der Kunststofffolie (300) parallel zu der Verschiebungsebene (P) gestattet, um den Bezugspunkt des Brillenglases in Ausrichtung auf den Bezugspunkt der Kunststofffolie zu führen.

## Claims

1. Chamber at variable internal pressure, comprising a sealed-connection assembly able to slide inside a plane of translation (P), the said connection assembly itself comprising:
- a first rigid component (1) provided with an orifice (O₁) and with a first planar surface (S₁) surrounding the said orifice; and
- a second rigid component (2) provided with a second planar surface (S₂) surrounding a central part of the said second component;
the first and second components being arranged in such a way that the central part of the second component faces the orifice of the first component with the first and second surfaces parallel and facing one another, out of the first and second surfaces, one of them (1) comprising a groove (G) surrounding the orifice or the central part, respectively, along a closed path, and the said connection assembly further comprising:
- a flat seal (3), with a planar active surface (S₃) in the shape of a circular ring, and arranged in the groove (G) in such a way that the active surface of the said flat seal is in continuous contact along the closed path with the planar surface (S₂) of the other (2) of the first and second components than the one which comprises the groove, and referred to as the counter-surface;
- at least one first o-ring seal (4), arranged between the flat seal (3) and a bottom of the groove (G), a depth of the groove being somewhere between a thickness of the first o-ring seal and a sum of the said thickness of the first o-ring seal with a thickness of the flat seal;
- a system (30, 31) for bringing about a movement of the first (1) and second (2) components one relative to the other along two axes (X, Y) which are parallel to the plane of translation (P), which system is able to cause the active surface (S₃) of the flat seal (3) to slide against the counter-surface (S₂); and
- a system for clamping the first (1) and second (2) components, the clamping system being arranged to compress the flat seal (3) against the counter-surface (S₂), producing a compression force on the said flat seal through the first o-ring seal (4), perpendicular to the plane of translation (P),
in which chamber the said first rigid component (1) forms at least part of a wall of the said chamber and the second rigid component (2) is connected to a support (10) extending inside the said chamber so that the said support is able to move with respect to the chamber in directions of translation which are parallel to the said plane of translation (P) when the system (30, 31) for bringing about movement is actuated.

2. Chamber according to Claim 1, in which out of the active surface (S₃) of the flat seal (3) and the counter-surface (S₂) at least one is coated with a lubricant.

3. Chamber according to Claim 1 or 2, further comprising a second o-ring seal (5) arranged between the flat seal (3) and the bottom of the groove (G) concentrically with the first o-ring seal (4), the second o-ring seal having a thickness identical to the thickness of the first o-ring seal so that the first and second o-ring seals are simultaneously compressed between the said flat seal and the said bottom of the groove.

4. Chamber according to any one of the preceding claims, in which the counter-surface (S₂) has a mean deviation on roughness Ra of less than 3.2 µm, preferably less than 0.8 µm.

5. Chamber according to any one of the preceding claims, in which the clamping system comprises at least one screw (40, 41) engaged in at least one portion connected rigidly to one out of the first (1) or second (2) components, and arranged to adjust the compression force on the flat seal (3).

6. Chamber according to any one of the preceding claims, in which the central part of the second component (2) comprises a projecting portion (20) that is narrower than the orifice (O₁) of the first component (1) and engaged in the said orifice with free space around the said projecting portion, inside a peripheral edge (B) of the orifice.

7. Chamber according to any one of the preceding claims, in which the support (10) comprises a fixing head (13) designed to hold a spectacles lens (400) firmly inside the chamber, and in which the said support also comprises an axial-movement system (11, 14, 15) designed also to move the fixing head parallel to an axis (A-A) which passes through the plane of translation (P) and also to turn the said fixing head about the said axis.

8. Device for applying a plastic film (300) to a spectacles lens (400), comprising:
- a chamber at variable internal pressure according to any one of the preceding claims, comprising lateral walls (100), a bottom wall and a top wall (101), the first rigid component (1) forming at least part of the bottom wall and the top wall being provided with an opening (O₁₀₁);
- a system for fixing the film around the opening (O₁₀₁) in the top wall (101) and designed to hold a peripheral edge of the film (300) firmly so that the said film forms a sealed closure of the chamber; and
- a system (200) for varying and controlling the pressure in the chamber, the film held by the fixing system having, in the opening (O₁₀₁) in the top wall (101) a deformation that varies as a function of the said pressure;
in which the system bringing about movement allows a reference point of the said spectacles lens (400) to be moved with respect to a reference point of the plastic film (300) parallel to the plane of translation (P) in order to bring the reference point of the spectacles lens into alignment with the reference point of the plastic film.
